# EUROPEAN PATENT APPLICATION

(11) **EP 4 738 816 A1**
(43) Date of publication of application: **06.05.2026**
(21) Application number: 24832126.7
(22) Date of filing: 28.06.2024
(51) Int. Cl.: H04N 19/11, H04N 19/136, H04N 19/176

(54) **PREDICTION DEVICE, ENCODING DEVICE, DECODING DEVICE, AND PROGRAM**

(30) Priority: 29.06.2023 JP 2023107237
(71) Applicant: Nippon Hoso Kyokai, Tokyo 150-8001 (JP)
(72) Inventor: NEMOTO, Shimpei, Tokyo 157-8510 (JP); KUSAKABE, Yuichi, Tokyo 157-8510 (JP); IWAMURA, Shunsuke, Tokyo 157-8510 (JP); ICHIGAYA, Atsuro, Tokyo 157-8510 (JP)
(74) Representative: SSM Sandmair
(86) International application number: PCT/JP2024/023600
(87) International publication number: WO 2025/005269

(57) **Abstract**

A prediction device includes: evaluation means configured to apply a predetermined encoding tool to a target block of prediction, and calculate an evaluation value for each candidate prediction mode by an algorithm common to an encoding side and a decoding side using an adjacent decoded area adjacent to the target block; and determination means configured to determine at least one prediction mode to be used for the prediction from among the candidate prediction modes according to the evaluation value. The candidate prediction modes include an additional prediction mode added to basic prediction modes when the predetermined encoding tool is applied. The evaluation means controls the number of additional prediction modes to be added between basic prediction modes according to at least one of a size of the target block and a shape of the target block.

## Description

### TECHNICAL FIELD

The present disclosure relates to a prediction device, an encoding device, a decoding device, and a program.

### BACKGROUND ART

In video encoding schemes such as HEVC (High Efficiency Video Codec) and VVC (Versatile Video Coding), an encoding device generates a prediction block, which is a prediction image for a coding block (CU: Coding Unit) obtained by dividing an original image into block units, and transmits the difference between the coding block of the original image and the prediction block after performing transform, quantization, and entropy encoding.

As methods for generating a prediction image, inter prediction using correlation between frames and intra prediction using correlation within a frame are prepared. As intra prediction methods, in addition to Planar prediction and DC prediction, directional prediction which is linear prediction can be selected from 33 directions in HEVC and 65 directions in VVC.

In intra prediction, a technology is being studied in which a prediction trial is performed using a decoded area around a block to be encoded as a prediction trial area (also referred to as a "template") to derive an intra prediction mode used for intra prediction (for example, see Non Patent Literature 1). Such a technology utilizes the fact that evaluation of intra prediction in the prediction trial area matches between an encoding side and a decoding side. According to such a technology, for example, it is possible to reduce the overhead of signaling of the intra prediction mode, and it is possible to derive an additional directional prediction which subdivides intervals between conventional prediction directions (also referred to as "basic directional prediction modes") to form new prediction directions.

### CITATION LIST

### NON PATENT LITERATURE

Non Patent Literature 1: JVET-C0061 "Decoder-side intra mode derivation"

### DISCLOSURE OF INVENTION

A prediction device according to a first aspect is a device configured to perform prediction in block units obtained by dividing an image. The prediction device includes: evaluation means configured to apply a predetermined encoding tool to a target block of the prediction, and calculate an evaluation value for each candidate prediction mode by an algorithm common to an encoding side and a decoding side using an adjacent decoded area adjacent to the target block; and determination means configured to determine at least one prediction mode to be used for the prediction from among the candidate prediction modes according to the evaluation value calculated by the evaluation means. The candidate prediction modes include an additional prediction mode added to basic prediction modes when the predetermined encoding tool is applied. The evaluation means has control means configured to control the number of the additional prediction modes to be added between the basic prediction modes according to at least one of a size of the target block and a shape of the target block.

An encoding device according to a second aspect includes the prediction device according to the first aspect.

A decoding device according to a third aspect includes the prediction device according to the first aspect.

A program according to a fourth aspect causes a computer to function as the prediction device according to the first aspect.

### BRIEF DESCRIPTION OF DRAWINGS

Fig. 1 is a diagram illustrating a configuration of an encoding device according to an embodiment.
Fig. 2 is a diagram for explaining an example of an intra prediction mode according to the embodiment.
Fig. 3 is a diagram for explaining an example of a predetermined encoding tool using a template in intra prediction according to the embodiment.
Fig. 4 is a diagram for explaining TIMD according to the embodiment.
Fig. 5 is a diagram for explaining DIMD according to the embodiment.
Fig. 6 is a diagram illustrating a configuration of an intra predictor on an encoding side according to the embodiment.
Fig. 7 is a diagram for explaining a basic directional prediction mode according to the embodiment.
Fig. 8 is a diagram for explaining additional mode control according to a block size according to the embodiment.
Fig. 9 is a diagram for explaining additional mode control according to a block shape according to the embodiment.
Fig. 10 is a diagram for explaining additional mode control according to an angular range of directional prediction according to the embodiment.
Fig. 11 is a diagram illustrating a configuration of a decoding device according to the embodiment.
Fig. 12 is a diagram illustrating a configuration of an intra predictor on a decoding side according to the embodiment.
Fig. 13 is a diagram illustrating an operation example of the intra predictor according to the embodiment.

### DESCRIPTION OF EMBODIMENTS

In the conventional technology, the number of additional directional prediction modes added between basic directional prediction modes having consecutive mode numbers is always one. That is, the density of the additional directional prediction modes is fixed to a constant density.

Therefore, for example, when the number of the basic directional prediction modes is 65 (65 directions), the number of the additional directional prediction modes is fixed to 64 (64 directions). In this case, the encoding side and the decoding side determine a final intra prediction mode by evaluation using a template from among candidate prediction modes including a total of 129 (129 directions) directional prediction modes. However, in such a method, there is room for improvement in terms of improving prediction accuracy in intra prediction.

Note that such a problem may occur not only in intra prediction but also in inter prediction.

Therefore, the present disclosure provides a prediction device, an encoding device, a decoding device, and a program capable of improving prediction accuracy.

A prediction device according to the present disclosure is a prediction device configured to perform prediction in block units obtained by dividing an image, comprising: evaluation means configured to apply a predetermined encoding tool to a target block of the prediction, and calculate an evaluation value for each candidate prediction mode by an algorithm common to an encoding side and a decoding side using an adjacent decoded area adjacent to the target block; and determination means configured to determine at least one prediction mode to be used for the prediction from among the candidate prediction modes according to the evaluation value calculated by the evaluation means. The candidate prediction modes include an additional prediction mode added to basic prediction modes when the predetermined encoding tool is applied. The evaluation means has control means configured to control an additional mode density indicating the number of the additional prediction modes to be added between the basic prediction modes having consecutive mode numbers, according to at least one of a size of the target block and a shape of the target block.

In an embodiment, the prediction is intra prediction, the basic prediction modes are basic directional prediction modes, and the additional prediction mode is an additional directional prediction mode. The control means controls an additional mode density indicating the number of the additional directional prediction modes to be added between the basic directional prediction modes having consecutive mode numbers, according to at least one of the size of the target block and the shape of the target block.

In the embodiment, the prediction is assumed to be intra prediction, but the prediction is not limited to intra prediction and may be inter prediction.

Hereinafter, an encoding device and a decoding device including an intra prediction device according to an embodiment will be described with reference to the drawings. The encoding device and the decoding device respectively perform encoding and decoding of video (i.e., moving images) represented by MPEG. In the description of the drawings below, the same or similar parts are denoted by the same or similar reference numerals.

### (1) Encoding Device

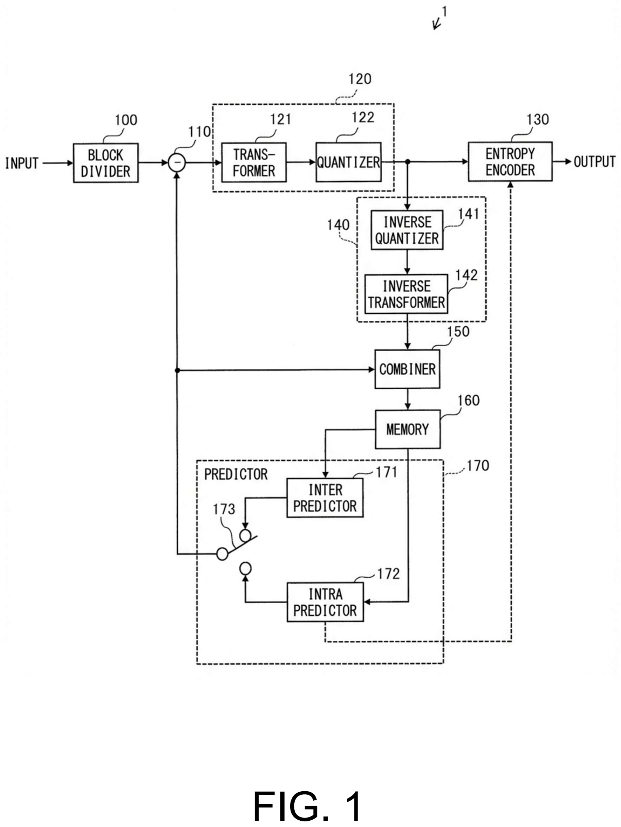

The encoding device according to the present embodiment will be described with reference to Figs. 1 to 10.

### (1.1) Configuration of Encoding Device

First, a configuration of an encoding device 1 according to the present embodiment will be described. Fig. 1 is a diagram illustrating the configuration of the encoding device 1 according to the present embodiment.

The encoding device 1 is a device that encodes an input image to generate a bit stream and outputs the bit stream. The encoding device 1 includes a block divider 100, a subtractor 110, a transformer/quantizer 120, an entropy encoder 130, an inverse quantizer/inverse transformer 140, a combiner 150, a memory 160, and a predictor 170.

The block divider 100 divides an original image, which is an input image in units of frames (or pictures) constituting a moving image, into a plurality of image blocks, and outputs the image blocks obtained by the division to the subtractor 110. The size of the image block is, for example, 32×32 pixels, 16×16 pixels, 8×8 pixels, or 4×4 pixels. The shape of the image block is not limited to a square but may be a rectangle (non-square). The image block is a unit for which the encoding device 1 performs encoding and a unit for which the decoding device performs decoding. Such an image block is also referred to as a coding block (CU).

The input image is composed of a luminance signal (Y) and chrominance signals (Cb, Cr), and each pixel in the input image is composed of a luminance component (Y) and chrominance components (Cb, Cr). The encoding device 1 supports, for example, three chroma formats of 4:4:4, 4:2:2, and 4:2:0. The block divider 100 outputs a luminance block by performing block division on the luminance signal, and outputs a chrominance block by performing block division on the chrominance signal. The shape of the block division may be the same for the luminance signal and the chrominance signal, or the division shape may be independently controllable for the luminance signal and the chrominance signal.

The subtractor 110 calculates a prediction residual representing a difference (error) between the coding block output by the block divider 100 and a prediction block obtained by predicting the coding block by the predictor 170. Specifically, the subtractor 110 calculates the prediction residual by subtracting each pixel value of the prediction block from each pixel value of the block, and outputs the calculated prediction residual to the transformer/quantizer 120.

The transformer/quantizer 120 performs a transform process and a quantization process in block units. The transformer/quantizer 120 has a transformer 121 and a quantizer 122.

The transformer 121 performs the transform process on the prediction residual output by the subtractor 110 to calculate transform coefficients, and outputs the calculated transform coefficients to the quantizer 122. The transform refers to, for example, Discrete Cosine Transform (DCT), Discrete Sine Transform (DST), Karhunen Loeve Transform (KLT), or the like. The transform process includes a transform skip in which the transform process is not performed. The transform skip includes a transform applying only a horizontal transform process and a transform applying only a vertical transform process. Further, the transformer 121 may perform a secondary transform process of further applying a transform process to the transform coefficients obtained by the transform process. The secondary transform process may be applied only to a partial area of the transform coefficients.

The quantizer 122 quantizes the transform coefficients output by the transformer 121 using a quantization parameter and a quantization matrix, and outputs quantized transform coefficients, which are the quantized transform coefficients, to the entropy encoder 130 and the inverse quantizer/inverse transformer 140. Note that the quantization parameter is a parameter commonly applied to each transform coefficient in a block and is a parameter determining coarseness of quantization. The quantization matrix is a matrix having quantization values used when quantizing each transform coefficient as elements.

The entropy encoder 130 performs entropy encoding on the quantized transform coefficients output by the quantizer 122, performs data compression to generate a bit stream, and outputs the bit stream to the outside of the encoding device 1. For the entropy encoding, Huffman coding, CABAC (Context-based Adaptive Binary Arithmetic Coding), or the like can be used. Note that the entropy encoder 130 receives information regarding prediction (flag or index) from the predictor 170, and also performs encoding and bit stream output of the input information.

The inverse quantizer/inverse transformer 140 performs an inverse quantization process and an inverse transform process in block units. The inverse quantizer/inverse transformer 140 has an inverse quantizer 141 and an inverse transformer 142.

The inverse quantizer 141 performs an inverse quantization process corresponding to the quantization process performed by the quantizer 122. Specifically, the inverse quantizer 141 reconstructs transform coefficients by inverse-quantizing the quantized transform coefficients output by the quantizer 122 using the quantization parameter and the quantization matrix, and outputs the reconstructed transform coefficients to the inverse transformer 142.

The inverse transformer 142 performs an inverse transform process corresponding to the transform process performed by the transformer 121. For example, when the transformer 121 performs the discrete cosine transform, the inverse transformer 142 performs an inverse discrete cosine transform. The inverse transformer 142 reconstructs the prediction residual by performing the inverse transform process on the transform coefficients output by the inverse quantizer 141, and outputs the reconstructed prediction residual, which is the reconstructed prediction residual, to the combiner 150.

The combiner 150 combines the reconstructed prediction residual output by the inverse transformer 142 and the prediction block output by the predictor 170 by adding them in pixel units. The combiner 150 decodes (reconstructs) the block by adding each pixel value of the reconstructed prediction residual and each pixel value of the prediction block, and outputs the reconstructed block to the memory 160. Hereinafter, the reconstructed block is also referred to as a decoded block.

The memory 160 stores the reconstructed block output by the combiner 150, and accumulates the reconstructed block as a decoded image in frame units. The memory 160 outputs the stored reconstructed block or decoded image to the predictor 170. Note that a loop filter may be provided between the combiner 150 and the memory 160.

The predictor 170 performs prediction in block units. The predictor 170 has an inter predictor 171, an intra predictor 172, and a switcher 173.

The inter predictor 171 calculates a motion vector by a method such as block matching using the decoded image stored in the memory 160 as a reference image, predicts the coding block to generate an inter prediction block, and outputs the generated inter prediction block to the switcher 173. In this case, the inter predictor 171 selects an optimal inter prediction method from among inter prediction using a plurality of reference images (typically, bi-prediction) and inter prediction using one reference image (uni-prediction), and performs inter prediction using the selected inter prediction method. The inter predictor 171 outputs information regarding inter prediction (motion vector, etc.) to the entropy encoder 130.

The intra predictor 172 generates an intra prediction block by referring to decoded pixels around the block among the decoded images stored in the memory 160, and outputs the generated intra prediction block to the switcher 173. Generally, the intra predictor 172 selects an intra prediction mode to be applied to the coding block of intra prediction from among a plurality of intra prediction modes, and predicts the coding block of intra prediction using the selected intra prediction mode. The intra predictor 172 outputs information regarding the selected intra prediction mode to the entropy encoder 130.

The switcher 173 switches between the inter prediction block output by the inter predictor 171 and the intra prediction block output by the intra predictor 172, and outputs one of the prediction blocks to the subtractor 110 and the combiner 150.

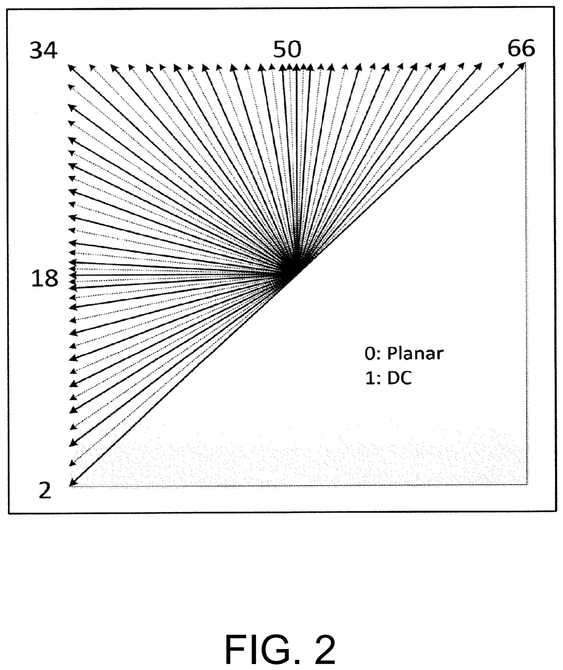

Fig. 2 is a diagram for explaining an example of an intra prediction mode according to the present embodiment. The intra predictor 172 performs intra prediction on the coding block. In the illustrated example, candidates for the intra prediction mode of the luminance block are Planar prediction, DC prediction, and 65 types of directional prediction, which are a total of 67 types of intra prediction modes.

Mode 0 of the prediction modes is Planar prediction, Mode 1 of the prediction modes is DC prediction, and Modes 2 to 66 of the prediction modes are directional prediction (Intra Angular). In the directional prediction, the direction of the arrow indicates the prediction direction (reference direction), the starting point of the arrow indicates the position of the pixel to be predicted, and the end point of the arrow indicates the position of the reference pixel used for prediction of this pixel to be predicted (also referred to as "reference pixel position"). A total of 65 modes are prepared for directional prediction, and the selectable prediction directions are determined by the shape (aspect ratio) of the block. Note that in the illustrated example, the directional prediction is assumed to be 65 directions, but the directional prediction may be more than 65 directions or less than 65 directions.

As prediction directions parallel to a diagonal line passing through the upper right vertex and the lower left vertex of the block, there are Mode 2 which is a prediction mode referring to the lower left direction, and Mode 66 which is a prediction mode referring to the upper right direction, and mode numbers are assigned every predetermined angle clockwise from Mode 2 to Mode 66. Mode 34 is a prediction mode referring to the upper left direction. Specifically, when the horizontal direction is 0°, the prediction direction of Mode 2 is -45°, the prediction direction of Mode 18 is 0°, the prediction direction of Mode 34 is 45°, the prediction direction of Mode 50 is 90°, and the prediction direction of Mode 66 is 135°. Note that Mode 18 is also referred to as horizontal prediction, and Mode 50 is also referred to as vertical prediction.

In this case, each directional prediction smaller than Mode 34, that is, Modes 2 to 33 are directional predictions referring to the left side of the coding block, and their prediction directions are the left side direction of the coding block. On the other hand, each directional prediction larger than Mode 34, that is, Modes 35 to 66 are directional predictions referring to the upper side of the coding block, and their prediction directions are the upper side direction of the coding block.

### (1.2) Example of Predetermined Encoding Tool Using Template in Intra Prediction

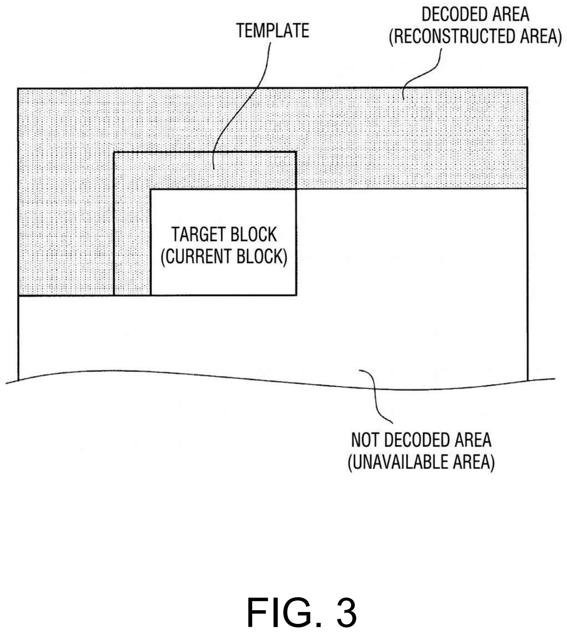

Fig. 3 is a diagram for explaining an example of a predetermined encoding tool using a template in intra prediction according to the present embodiment.

In intra prediction, research is being conducted on a predetermined encoding tool that uses a decoded area around a target block (Current block) as a template to evaluate each candidate prediction mode (each candidate intra prediction mode) by an algorithm common to the encoding side and the decoding side, and derives an intra prediction mode to be used for intra prediction. Such a predetermined encoding tool utilizes the fact that evaluation of intra prediction on the template matches on both the encoding side and the decoding side. According to such a predetermined encoding tool, for example, it is possible to reduce the overhead of signaling of the intra prediction mode, and it is possible to derive an additional directional prediction which subdivides intervals between conventional prediction directions (basic directional prediction modes) to form new prediction directions.

Hereinafter, TIMD (Template-based Intra Mode Derivation) and DIMD (Decoder-side Intra Mode Derivation) will be described as examples of the predetermined encoding tool.

### (1.2.1) TIMD

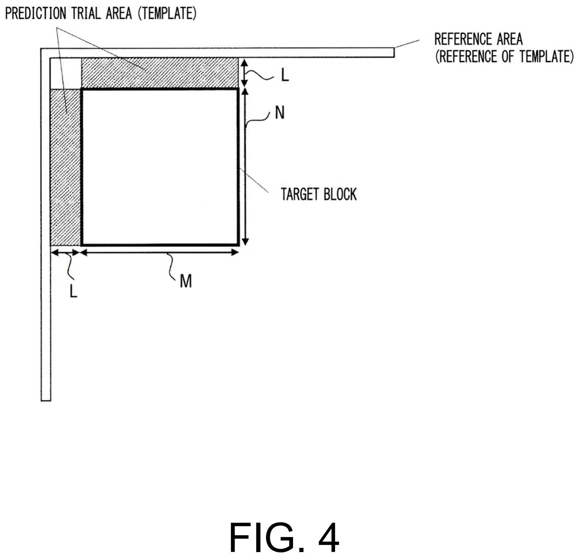

Fig. 4 is a diagram for explaining TIMD according to the present embodiment. The intra predictor 172 according to the present embodiment may perform intra prediction corresponding to TIMD.

In TIMD, an adjacent decoded area of a target block of intra prediction is used as a template, and the encoding side and the decoding side perform a prediction trial on the template by a common algorithm, thereby deriving a common intra prediction mode on the encoding side and the decoding side. Therefore, it is possible to reduce the overhead of signaling of the intra prediction mode, and it is possible to derive an additional directional prediction which subdivides intervals between conventional prediction directions to form new prediction directions. Note that the entropy encoder 130 may signal a flag indicating that TIMD is applied to the decoding side for a block to which TIMD is applied. Note that TIMD may be applied only to blocks of luminance signals and need not be applied to blocks of chrominance signals.

First, the intra predictor 172 specifies an adjacent decoded area adjacent to the target block as a template, and specifies a decoded area outside the template as a reference area. The reference area is a set of adjacent reference pixels (reference pixel line) on the left side and upper side of the template. The width L of the template may be variably set according to the size of the target block (that is, width M × height N of the target block). For example, if the size of the target block is 8 or less, the width L of the template may be set to 2, and otherwise, the width L of the template may be set to 4.

Second, the intra predictor 172 calculates a cost using a cost function by performing a prediction trial of predicting the template from the reference area for each intra prediction mode. The cost function may be, for example, SAD (Sum of Absolute Differences) or SATD (Sum of Absolute Transformed Differences). The intra predictor 172 predicts the template from the reference area using candidate intra prediction modes, and calculates SAD or SATD between the prediction result (each predicted pixel) and the template (each decoded pixel) as a cost (evaluation value). In this case, the number of conventional directional predictions is 65 (65 directions), but the number of directional predictions for which the prediction trial is performed may be 129 (129 directions). That is, additional directional prediction which subdivides intervals between conventional prediction directions to form new prediction directions is applicable.

Third, the intra predictor 172 determines at least one intra prediction mode to be used for intra prediction according to the cost calculated for each intra prediction mode. For example, the intra predictor 172 performs cost calculation in all candidate intra prediction modes, and determines an intra prediction mode having the minimum cost as a final intra prediction mode of the target block. However, the intra predictor 172 does not necessarily have to perform cost calculation for all candidate intra prediction modes. While performing cost calculation for each candidate intra prediction mode, if the calculated cost satisfies a predetermined threshold condition, the intra predictor 172 may determine the intra prediction mode satisfying the threshold condition as the final intra prediction mode of the target block.

Fourth, the intra predictor 172 predicts each pixel of the target block by the final intra prediction mode determined based on the cost, using the adjacent decoded area adjacent to the target block as a reference area (reference pixel), and generates a prediction block (intra prediction block).

Note that the number of final intra prediction modes determined based on the calculated costs is not limited to one, and two or more intra prediction modes selected in ascending order of cost may be determined. For example, the intra predictor 172 may determine two final intra prediction modes based on the calculated costs, generate two prediction blocks by intra prediction using each of these two intra prediction modes, and output a final prediction block by performing weighted averaging (weighted combination) of the two prediction blocks according to the cost of each intra prediction mode.

### (1.2.2) DIMD

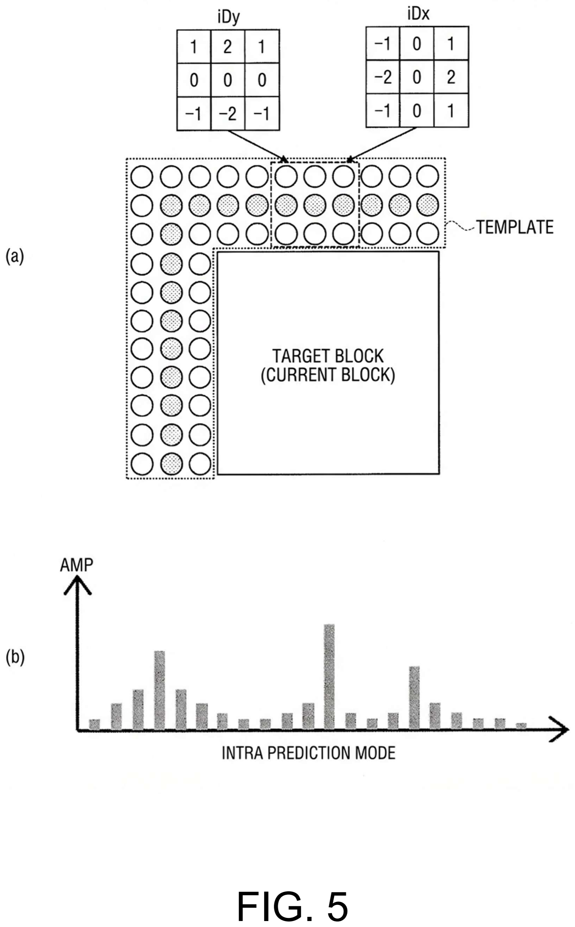

Fig. 5 is a diagram for explaining DIMD according to the present embodiment. The intra predictor 172 according to the present embodiment may perform intra prediction corresponding to DIMD. In this case, differences between DIMD and TIMD will be mainly described.

In DIMD, an adjacent decoded area of a target block of intra prediction is used as a template, and the encoding side and the decoding side perform Sobel filter processing for each window on the template by a common algorithm to detect an edge direction, thereby deriving a common intra prediction mode on the encoding side and the decoding side. Therefore, it is possible to reduce the overhead of signaling of the intra prediction mode, and it is possible to derive an additional directional prediction which subdivides intervals between conventional prediction directions to form new prediction directions. Note that the entropy encoder 130 may signal a flag indicating that DIMD is applied to the decoding side for a block to which DIMD is applied. Note that DIMD may be applied only to blocks of luminance signals and need not be applied to blocks of chrominance signals.

First, as illustrated in Fig. 5(a), the intra predictor 172 specifies an adjacent decoded area adjacent to the target block as a template. The width of the template may be 3.

Second, the intra predictor 172 performs Sobel filter processing on each center pixel hatched in the drawing in the template. In the illustrated example, iDx is a horizontal Sobel filter, and iDy is a vertical Sobel filter. The intra predictor 172 calculates a calculation result iDx of the horizontal Sobel filter and a calculation result iDy of the vertical Sobel filter for each center pixel. As illustrated in Fig. 5(b), the intra predictor 172 specifies a corresponding closest intra prediction mode (directional prediction mode) from among candidate intra prediction modes based on iDy/iDx, and creates a histogram by voting a value of "AMP = abs(iDx) + abs(iDy)" for the specified intra prediction mode. In this case, AMP corresponds to an evaluation value of each candidate intra prediction mode. In this case, the number of conventional directional predictions is 65 (65 directions), but the number of directional predictions for which the histogram creation is performed may be 129 (129 directions). That is, additional directional prediction which subdivides intervals between conventional prediction directions to form new prediction directions is applicable.

Third, the intra predictor 172 determines at least one intra prediction mode to be used for intra prediction according to the AMP calculated for each candidate intra prediction mode. For example, the intra predictor 172 performs AMP calculation for all center pixels of the template (each center pixel hatched in the drawing), and determines an intra prediction mode having the maximum AMP in the histogram as a final intra prediction mode of the target block. However, the intra predictor 172 does not necessarily have to perform AMP calculation for all center pixels of the template. While performing AMP calculation and histogram creation for each candidate intra prediction mode, if the calculated AMP satisfies a predetermined threshold condition, the intra predictor 172 may determine the intra prediction mode satisfying the threshold condition as the final intra prediction mode of the target block.

Fourth, the intra predictor 172 predicts each pixel of the target block by the final intra prediction mode determined based on the AMP, using the adjacent decoded area adjacent to the target block as a reference area (reference pixel), and generates a prediction block (intra prediction block).

Note that the number of final intra prediction modes determined based on the calculated costs is not limited to one, and two or more intra prediction modes selected in descending order of AMP may be determined. For example, the intra predictor 172 may determine two final intra prediction modes based on the calculated AMP, generate two prediction blocks by intra prediction using each of these two intra prediction modes, and output a final prediction block by performing weighted averaging (weighted combination) of the two prediction blocks according to the AMP of each intra prediction mode.

In this case, the intra predictor 172 may generate two prediction blocks by intra prediction using each of the two intra prediction modes, generate one prediction block by Planar prediction, and output a final prediction block by performing weighted averaging (weighted combination) of a total of three prediction blocks. Such an operation is also applicable to the above-described TIMD.

### (1.2.3) Problem of Predetermined Encoding Tool and Solution Therefor

In the predetermined encoding tools such as TIMD and DIMD described above, the number of additional directional prediction modes added between basic directional prediction modes having consecutive mode numbers is always one. That is, the density of additional directional prediction modes (also referred to as "additional mode density") is fixed to a constant density.

Therefore, for example, when the number of the basic directional prediction modes is 65 (65 directions), the number of the additional directional prediction modes is fixed to 64 (64 directions). In this case, the encoding side and the decoding side determine a final intra prediction mode by evaluation using a template from among candidate prediction modes including a total of 129 (129 directions) directional prediction modes. However, in such a method, there is room for improvement in terms of improving prediction accuracy in intra prediction.

In the present embodiment, the intra predictor 172 controls the additional mode density indicating the number of additional directional prediction modes added between basic directional prediction modes having consecutive mode numbers, according to at least one of the size of the target block, the shape of the target block, and the angular range of directional prediction. Thereby, it becomes possible to appropriately variably set the additional mode density, and it is possible to improve prediction accuracy when using the predetermined encoding tool for intra prediction.

### (1.3) Configuration of Intra Predictor

Next, a configuration of the intra predictor 172 according to the present embodiment will be described. The intra predictor 172 according to the present embodiment performs intra prediction applying the predetermined encoding tool (TIMD or DIMD) using a template in intra prediction.

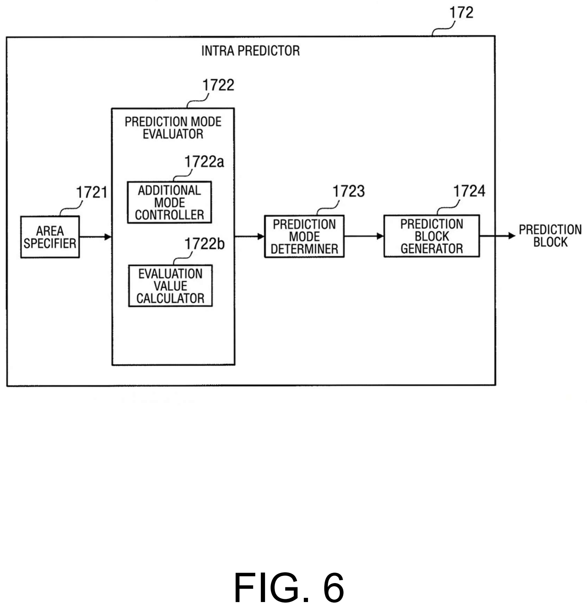

Fig. 6 is a diagram illustrating the configuration of the intra predictor 172 according to the present embodiment. The intra predictor 172 includes a area specifier 1721, a prediction mode evaluator 1722, a prediction mode determiner 1723, and a prediction block generator 1724.

The area specifier 1721 specifies an adjacent decoded area adjacent to a target block of intra prediction as a template. In the case of TIMD, the area specifier 1721 may further specify a decoded area outside the template as a reference area.

The prediction mode evaluator 1722 applies a predetermined encoding tool to the target block of intra prediction, and calculates an evaluation value for each candidate prediction mode using the template by an algorithm common to the encoding side and the decoding side. The prediction mode evaluator 1722 has an additional mode controller 1722a and an evaluation value calculator 1722b.

The additional mode controller 1722a controls an additional mode density indicating the number of additional directional prediction modes added between basic directional prediction modes having consecutive mode numbers, according to at least one of the size of the target block, the shape of the target block, and the angular range of directional prediction. Specific examples of the operation of the additional mode controller 1722a will be described later.

The evaluation value calculator 1722b calculates an evaluation value for each candidate intra prediction mode including the basic directional prediction mode and the additional directional prediction mode. For example, the evaluation value is a cost (SAD or SATD) in the case of TIMD, and is AMP in the case of DIMD. The evaluation value calculator 1722b outputs the evaluation value of each candidate intra prediction mode to the prediction mode determiner 1723.

The prediction mode determiner 1723 determines at least one prediction mode to be used for intra prediction from among the candidate prediction modes according to the evaluation value calculated by the prediction mode evaluator 1722.

In the case of TIMD, the prediction mode determiner 1723 performs cost calculation for all candidate intra prediction modes, for example, and determines an intra prediction mode having the minimum cost as a final intra prediction mode of the target block. However, the prediction mode evaluator 1722 does not necessarily have to perform cost calculation for all candidate intra prediction modes. When the prediction mode evaluator 1722 performs cost calculation for each candidate intra prediction mode and the calculated cost satisfies a predetermined threshold condition (specifically, when it falls below a threshold), the prediction mode determiner 1723 may determine the intra prediction mode satisfying the threshold condition as the final intra prediction mode of the target block. The prediction mode determiner 1723 may determine two or more intra prediction modes selected in ascending order of cost as the final intra prediction modes of the target block.

In the case of DIMD, the prediction mode determiner 1723 determines at least one intra prediction mode to be used for intra prediction according to the AMP calculated for each candidate intra prediction mode. For example, the prediction mode determiner 1723 determines an intra prediction mode having the maximum AMP in a histogram obtained by performing AMP calculation for all center pixels of the template as the final intra prediction mode of the target block. However, the prediction mode evaluator 1722 does not necessarily have to perform AMP calculation for all center pixels of the template. When the prediction mode evaluator 1722 performs AMP calculation and histogram creation for each candidate intra prediction mode and the calculated AMP satisfies a predetermined threshold condition (specifically, when it exceeds a threshold), the prediction mode determiner 1723 may determine the intra prediction mode satisfying the threshold condition as the final intra prediction mode of the target block.

The prediction block generator 1724 predicts the target block by intra prediction using at least one intra prediction mode determined by the prediction mode determiner 1723, and generates a prediction block. When the prediction mode determiner 1723 determines one intra prediction mode, the prediction block generator 1724 generates an intra prediction block by the one intra prediction mode using decoded pixels around the target block as reference pixels, and outputs the generated intra prediction block.

When the prediction mode determiner 1723 determines a plurality of intra prediction modes, a plurality of prediction blocks may be generated by intra prediction using each of the plurality of intra prediction modes, and a prediction block obtained by weighted averaging (weighted combination) of the plurality of prediction blocks according to the cost of each intra prediction mode may be output. The prediction block generator 1724 may generate a plurality of prediction blocks by intra prediction using each of the plurality of intra prediction modes selected according to the evaluation values, generate one prediction block by Planar prediction, and output a final prediction block by performing weighted averaging (weighted combination) of these prediction blocks.

### (1.4) Specific Examples of Operation of Additional Mode Controller

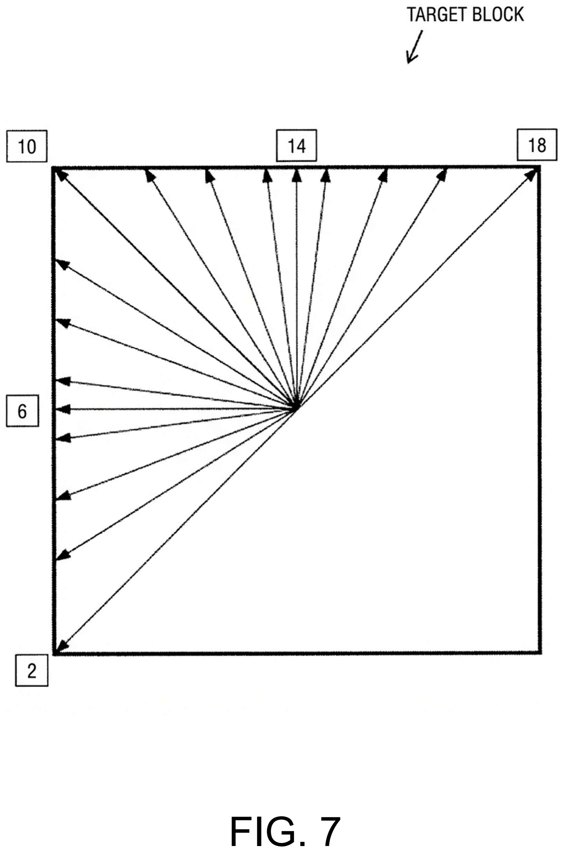

Next, specific examples of the operation of the additional mode controller 1722a according to the present embodiment will be described with reference to Figs. 7 to 10.

Fig. 7 is a diagram for explaining a basic directional prediction mode according to the present embodiment. In the present embodiment, for convenience of explanation, it is assumed that the basic directional prediction modes are a total of 16 (16 directions) from Mode 2 to Mode 18. Specifically, when the horizontal direction is 0°, the prediction direction of Mode 2 is -45°, the prediction direction of Mode 6 is 0°, the prediction direction of Mode 10 is 45°, the prediction direction of Mode 14 is 90°, and the prediction direction of Mode 18 is 135°. Note that Mode 0 is Planar prediction, Mode 1 is DC prediction, Mode 6 is horizontal prediction, and Mode 14 is vertical prediction.

### (1.4.1) Additional Mode Control According to Block Size

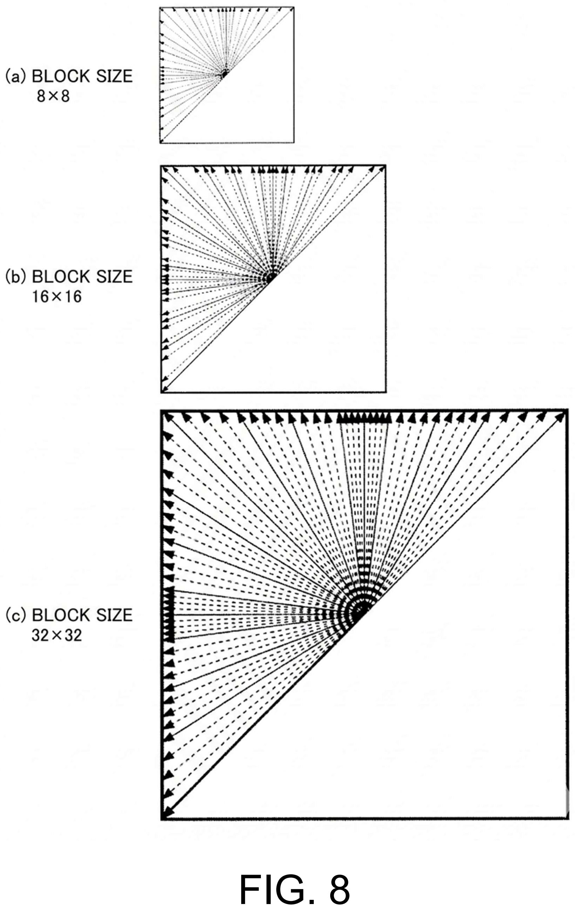

Fig. 8 is a diagram for explaining additional mode control according to a block size according to the present embodiment. Note that the block size of the target block can be expressed as a product of the width and height of the target block.

The additional mode controller 1722a sets the additional mode density to a first density in response to the size of the target block being a first size. The additional mode controller 1722a sets the additional mode density to a second density higher than the first density in response to the size of the target block being a second size larger than the first size. That is, the additional mode controller 1722a increases the number of additional directional prediction modes (that is, increases the additional mode density) as the size of the target block increases.

When the block size is small, the distance between reference pixels referred to in each basic directional prediction mode having consecutive mode numbers is short, but when the block size is large, the distance between reference pixels referred to in each basic directional prediction mode having consecutive mode numbers becomes far. Therefore, when the block size is large, the prediction accuracy of intra prediction can be improved by increasing the number of additional directional prediction modes (that is, increasing the additional mode density). On the other hand, when the block size is small, the arithmetic processing load related to the evaluation value calculation of candidate intra prediction modes can be reduced by decreasing the number of additional directional prediction modes (that is, decreasing the additional mode density).

Fig. 8(a) shows an example of adding additional directional prediction modes when the block size is 8×8 (total 64 pixels). When the block size is 8×8, the additional mode controller 1722a sets the number of additional directional prediction modes to be added between basic directional prediction modes having consecutive mode numbers to 1 (additional mode density = 1). That is, the additional mode controller 1722a adds one additional directional prediction mode between basic directional prediction modes having consecutive mode numbers.

Fig. 8(b) shows an example of adding additional directional prediction modes when the block size is 16×16 (total 256 pixels). When the block size is 16×16, the additional mode controller 1722a sets the number of additional directional prediction modes to be added between basic directional prediction modes having consecutive mode numbers to 2 (additional mode density = 2). That is, the additional mode controller 1722a adds two additional directional prediction modes between basic directional prediction modes having consecutive mode numbers.

Fig. 8(c) shows an example of adding additional directional prediction modes when the block size is 32×32 (total 1024 pixels). When the block size is 32×32, the additional mode controller 1722a sets the number of additional directional prediction modes to be added between basic directional prediction modes having consecutive mode numbers to 3 (additional mode density = 3). That is, the additional mode controller 1722a adds three additional directional prediction modes between basic directional prediction modes having consecutive mode numbers.

Note that the correspondence between the block size and the additional mode density shown in Fig. 8 is an example, and other correspondences may be adopted. For example, when the block size is 4×4, the additional mode controller 1722a may set the number of additional directional prediction modes to be added between basic directional prediction modes having consecutive mode numbers to 0 (additional mode density = 0).

### (1.4.2) Additional Mode Control According to Block Shape

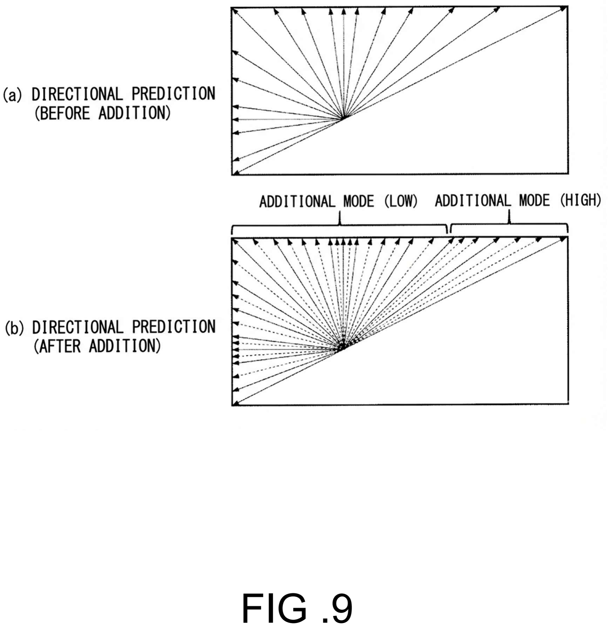

Fig. 9 is a diagram for explaining additional mode control according to a block shape according to the present embodiment. Note that the block shape of the target block can be expressed as a ratio of the width and height of the target block.

The additional mode controller 1722a may set the additional mode density to be uniform for the target block in response to the target block being a square (see Fig. 8).

On the other hand, in response to the target block being a non-square, the additional mode controller 1722a sets the additional mode density to be non-uniform for the target block. For example, as shown in Figs. 9(a) and 9(b), the additional mode controller 1722a may combine the additional mode control according to the block shape and the additional mode control according to the angular range of the prediction direction to vary the density of the additional directional prediction modes according to the angular range of the prediction direction within the non-square target block.

In response to the target block having a horizontally long shape in which the width is larger than the height, the additional mode controller 1722a may set a higher additional mode density for all or a part of upward prediction modes, which are basic directional prediction modes referring only to reference pixels in an upward direction, as compared with other basic directional prediction modes. When the target block has a horizontally long shape, the distance between reference pixels referred to in consecutive upward prediction modes becomes far. Therefore, for a target block having a horizontally long shape, the prediction accuracy of intra prediction can be improved by adding many additional directional prediction modes (that is, increasing the additional mode density) to the upward prediction modes. On the other hand, for leftward prediction modes, the arithmetic processing load related to the evaluation value calculation of candidate intra prediction modes can be reduced by decreasing the number of additional directional prediction modes (that is, decreasing the additional mode density).

In Fig. 9, the target block has a horizontally long shape. As shown in Fig. 9(b), the additional mode controller 1722a sets the number of additional directional prediction modes to be added between basic directional prediction modes referring to the upper right direction among the upward prediction modes to 2 (additional mode density = 2), and sets the number of additional directional prediction modes to be added between other basic directional prediction modes to 1 (additional mode density = 1). That is, in response to the target block having a horizontally long shape in which the width is larger than the height, the additional mode controller 1722a sets a higher additional mode density for prediction modes referring to reference pixels further to the right than upper right 45 degrees (135° when horizontal prediction is a reference) as compared with other basic directional prediction modes. Note that when the target block has a horizontally long shape, basic directional prediction modes referring to a direction further to the right than upper right 45 degrees are added by WAIP (Wide Angle Intra Prediction). The additional mode controller 1722a may set a higher additional mode density for such added basic directional prediction modes as compared with other basic directional prediction modes.

Note that the additional mode controller 1722a may combine and implement the additional mode control according to the block size and the additional mode control according to the block shape. For example, the additional mode controller 1722a may use the additional mode density according to the block size as a base additional mode density, and set the number of additional directional prediction modes to be added between basic directional prediction modes in a predetermined angular range to twice the base additional mode density. For example, when the block size is a horizontally long shape of 32×8 (total 256 pixels), it is assumed that the base additional mode density = 2. The additional mode controller 1722a may set the number of additional directional prediction modes to be added between upward prediction modes to 4 (additional mode density = 4) and set the number of additional directional prediction modes to be added between other basic directional prediction modes to 2 (additional mode density = 2) for the target block having a horizontally long shape of 32×8 (total 256 pixels).

On the other hand, in response to the target block having a vertically long shape in which the height is larger than the width, the additional mode controller 1722a may set a higher additional mode density for all or a part of leftward prediction modes, which are basic directional prediction modes referring only to reference pixels in a leftward direction, as compared with other basic directional prediction modes. When the target block has a vertically long shape, the distance between reference pixels referred to in consecutive leftward prediction modes becomes far. Therefore, for a target block having a vertically long shape, the prediction accuracy of intra prediction can be improved by adding many additional directional prediction modes (that is, increasing the additional mode density) to the leftward prediction modes. On the other hand, for upward prediction modes, the arithmetic processing load related to the evaluation value calculation of candidate intra prediction modes can be reduced by decreasing the number of additional directional prediction modes (that is, decreasing the additional mode density). For example, in response to the target block having a vertically long shape in which the height is larger than the width, the additional mode controller 1722a may set a higher additional mode density for prediction modes referring to reference pixels further to the downward direction than lower left 45 degrees (-45° when horizontal prediction is a reference) as compared with other basic directional prediction modes. Note that when the target block has a vertically long shape, basic directional prediction modes referring to a direction further to the downward direction than lower left 45 degrees are added by WAIP. The additional mode controller 1722a may set a higher additional mode density for such added basic directional prediction modes as compared with other basic directional prediction modes.

### (1.4.3) Additional Mode Control According to Angular Range of Directional Prediction

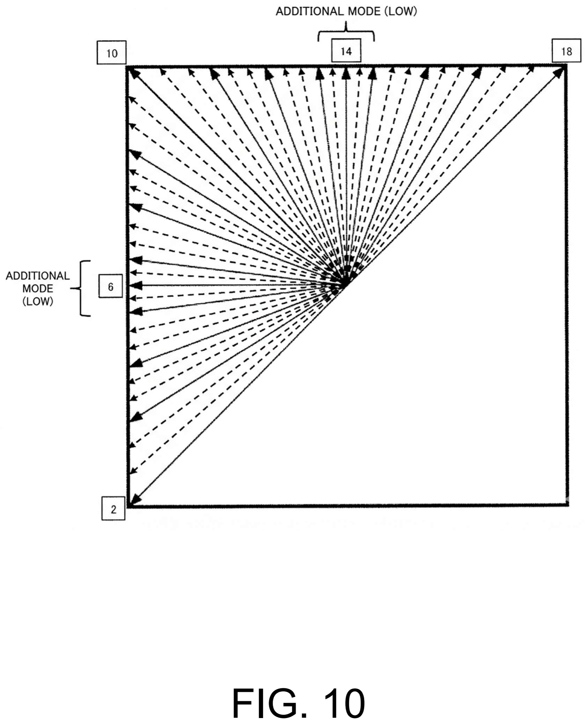

Fig. 10 is a diagram for explaining additional mode control according to an angular range of directional prediction according to the present embodiment.

The additional mode controller 1722a may set the additional mode density corresponding to horizontal prediction mode and vertical prediction mode among the basic directional prediction modes lower than the additional mode density corresponding to other basic directional prediction modes. Basic directional prediction modes near the horizontal prediction mode originally have high mode density, and basic directional prediction modes near the vertical prediction mode also originally have high mode density. Therefore, by lowering the additional mode density corresponding to the horizontal prediction mode and the vertical prediction mode, the arithmetic processing load related to the evaluation value calculation of candidate intra prediction modes can be reduced.

In the example of Fig. 10, the additional mode controller 1722a adds one additional directional prediction mode between Mode 6 which is the horizontal prediction mode and Mode 5 immediately preceding it, and adds one additional directional prediction mode between Mode 6 and Mode 7 immediately following it (additional mode density = 1). Also, the additional mode controller 1722a adds one additional directional prediction mode between Mode 14 which is the vertical prediction mode and Mode 13 immediately preceding it, and adds one additional directional prediction mode between Mode 14 and Mode 15 immediately following it (additional mode density = 1). On the other hand, the additional mode controller 1722a adds two additional directional prediction modes between other basic directional prediction modes (additional mode density = 2). In this manner, by adding many additional directional prediction modes (that is, increasing the additional mode density) for basic directional prediction modes other than the horizontal/vertical prediction modes, the prediction accuracy of intra prediction can be improved.

Note that the additional mode controller 1722a may combine and implement the additional mode control according to the block size and the additional mode control according to the angular range of directional prediction. For example, when the block size is 8×8 (total 64 pixels), the additional mode controller 1722a may set the additional mode density corresponding to the horizontal prediction mode and the vertical prediction mode to 0 (that is, no additional directional prediction mode), and add one additional directional prediction mode between other basic directional prediction modes (additional mode density = 1).

### (2) Decoding Device

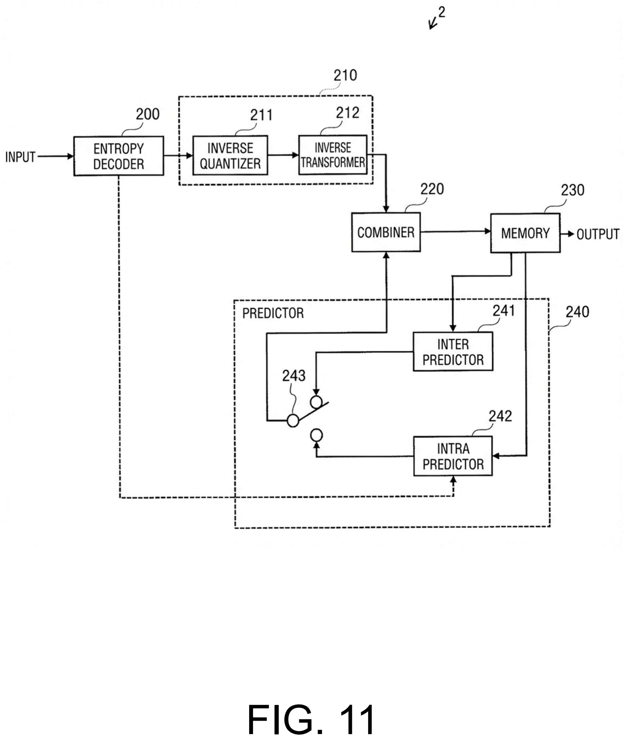

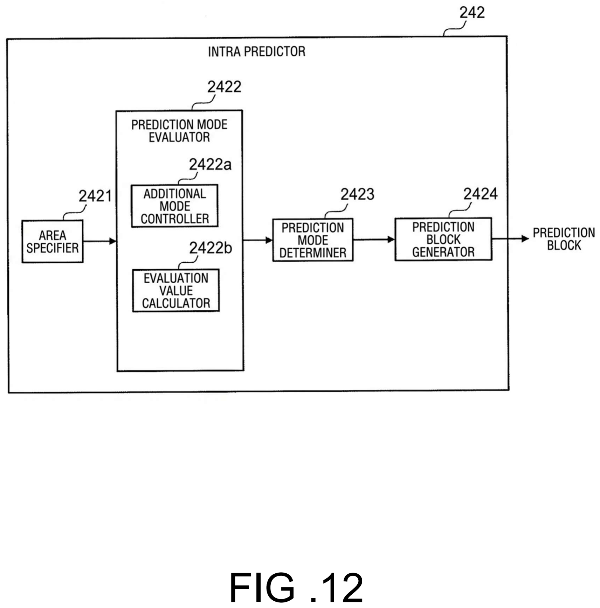

Next, the decoding device according to the present embodiment will be described with reference to Figs. 11 and 12.

Fig. 11 is a diagram illustrating a configuration of a decoding device 2 according to the present embodiment. The decoding device 2 is a device that derives a decoded image from an input bit stream and outputs the decoded image. The decoding device 2 includes an entropy decoder 200, an inverse quantizer/inverse transformer 210, a combiner 220, a memory 230, and a predictor 240.

The entropy decoder 200 decodes the bit stream generated by the encoding device 1, and outputs quantized transform coefficients to the inverse quantizer/inverse transformer 210. Also, the entropy decoder 200 acquires information regarding prediction (intra prediction and inter prediction), and outputs the acquired information to the predictor 240. In the present embodiment, the entropy decoder 200 may acquire a flag indicating that a predetermined encoding tool is applied, and output the flag to the predictor 240.

The inverse quantizer/inverse transformer 210 performs an inverse quantization process and an inverse transform process in block units. The inverse quantizer/inverse transformer 210 has an inverse quantizer 211 and an inverse transformer 212.

The inverse quantizer 211 performs an inverse quantization process corresponding to the quantization process performed by the quantizer 122 of the encoding device 1. The inverse quantizer 211 reconstructs transform coefficients of a coding block by inverse-quantizing the quantized transform coefficients output by the entropy decoder 200 using a quantization parameter and a quantization matrix, and outputs the reconstructed transform coefficients to the inverse transformer 212.

The inverse transformer 212 performs an inverse transform process corresponding to the transform process performed by the transformer 121 of the encoding device 1. The inverse transformer 212 reconstructs a prediction residual by performing an inverse transform process on the transform coefficients output by the inverse quantizer 211, and outputs the reconstructed prediction residual, which is the reconstructed prediction residual, to the combiner 220. The inverse transform process includes a transform skip in which the inverse transform process is not performed. Further, the inverse transformer 212 may perform an inverse secondary transform process of further applying an inverse transform process to a signal obtained by the inverse transform process.

The combiner 220 combines the prediction residual output by the inverse transformer 212 and the prediction block output by the predictor 240 by adding them in pixel units, decodes (reconstructs) the original block, and outputs a reconstructed block to the memory 230.

The memory 230 stores the reconstructed block output by the combiner 220, and accumulates the reconstructed block as a decoded image in frame units. The memory 230 outputs the reconstructed block or decoded image to the predictor 240. Also, the memory 230 outputs the decoded image in frame units to the outside of the decoding device 2. Note that a loop filter may be provided between the combiner 220 and the memory 230.

The predictor 240 performs prediction in block units. The predictor 240 has an inter predictor 241, an intra predictor 242, and a switcher 243.

The inter predictor 241 predicts the coding block by inter prediction using the decoded image stored in the memory 230 as a reference image. The inter predictor 241 generates an inter prediction block by performing inter prediction according to motion vector information and the like output by the entropy decoder 200, and outputs the generated inter prediction block to the switcher 243.

The intra predictor 242 generates an intra prediction block by referring to decoded pixels around a prediction target block (coding block) among the decoded images stored in the memory 230, and outputs the generated intra prediction block to the switcher 243. The intra predictor 242 according to the present embodiment performs intra prediction corresponding to the above-described predetermined encoding tool.

The switcher 243 switches between the inter prediction block output by the inter predictor 241 and the intra prediction block output by the intra predictor 242, and outputs one of the prediction blocks to the combiner 220.

Fig. 12 is a diagram illustrating a configuration of the intra predictor 242 according to the present embodiment. The intra predictor 242 includes a area specifier 2421, a prediction mode evaluator 2422, a prediction mode determiner 2423, and a prediction block generator 2424. In this case, the area specifier 2421, the prediction mode evaluator 2422, the prediction mode determiner 2423, and the prediction block generator 2424 perform the same processes as the area specifier 1721, the prediction mode evaluator 1722, the prediction mode determiner 1723, and the prediction block generator 1724 on the encoding side, respectively.

### (3) Operation Example of Intra Prediction

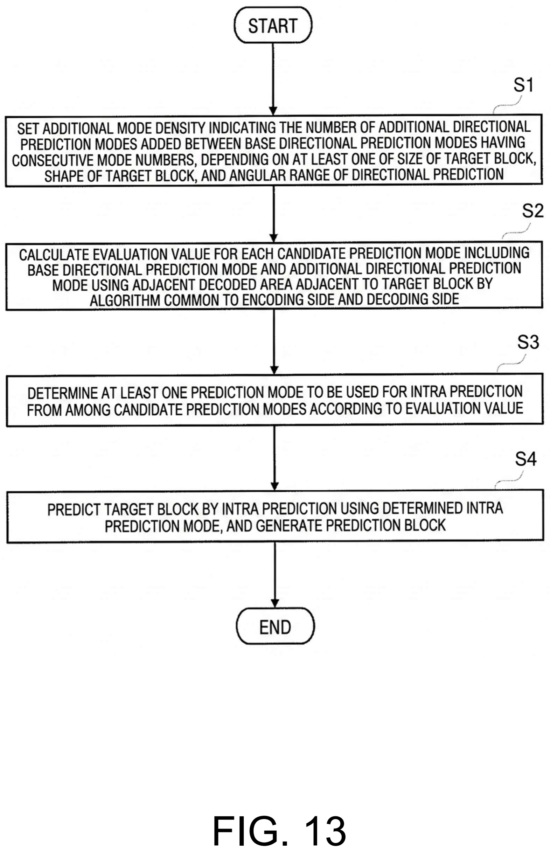

Next, an operation example of intra prediction according to the present embodiment will be described. Fig. 13 is a diagram illustrating an operation example of the intra predictor 242 on the decoding side according to the present embodiment. In this case, the operation of the intra predictor 242 on the decoding side will be described as an example, but the intra predictor 172 on the encoding side also performs the same operation as the intra predictor 242 on the decoding side.

In step S1, an additional mode controller 2422a controls (variably sets) an additional mode density indicating the number of additional directional prediction modes added between basic directional prediction modes having consecutive mode numbers, according to at least one of the size of the target block, the shape of the target block, and the angular range of directional prediction.

In step S2, an evaluation value calculator 2422b calculates an evaluation value for each candidate intra prediction mode including the basic directional prediction mode and the additional directional prediction mode. For example, the evaluation value calculator 2422b calculates a cost (SAD or SATD) of each candidate intra prediction mode as an evaluation value in the case of TIMD, and calculates AMP of each candidate intra prediction mode as an evaluation value in the case of DIMD.

In step S3, the prediction mode determiner 2423 determines at least one prediction mode to be used for intra prediction from among candidate prediction modes according to the evaluation value calculated by the prediction mode evaluator 2422. In the case of TIMD, the prediction mode determiner 2423 performs cost calculation for all candidate intra prediction modes, for example, and determines an intra prediction mode having the minimum cost as a final intra prediction mode of the target block. On the other hand, in the case of DIMD, the prediction mode determiner 2423 determines an intra prediction mode having the maximum AMP in a histogram obtained by performing AMP calculation for all center pixels of the template as the final intra prediction mode of the target block, for example.

In step S4, the prediction block generator 2424 predicts the target block by intra prediction using the intra prediction mode determined by the prediction mode determiner 2423, and generates a prediction block. When the prediction mode determiner 2423 determines one intra prediction mode, the prediction block generator 2424 generates an intra prediction block by the one intra prediction mode using decoded pixels around the target block as reference pixels, and outputs the generated intra prediction block. When the prediction mode determiner 2423 determines a plurality of intra prediction modes, a plurality of prediction blocks may be generated by intra prediction using each of the plurality of intra prediction modes, and a prediction block obtained by weighted averaging (weighted combination) of the plurality of prediction blocks according to the cost of each intra prediction mode may be output.

### (4) Summary of Embodiment

Each of the intra predictors 172 and 242 according to the present embodiment includes: the prediction mode evaluators 1722 and 2422 configured to apply a predetermined encoding tool to a target block of intra prediction, and calculate an evaluation value for each candidate prediction mode by an algorithm common to an encoding side and a decoding side using an adjacent decoded area adjacent to the target block; and the prediction mode determiners 1723 and 2423 configured to determine at least one prediction mode to be used for intra prediction from among the candidate prediction modes according to the evaluation value calculated by the prediction mode evaluators 1722 and 2422. The candidate prediction modes include an additional directional prediction mode added to a basic directional prediction mode when the predetermined encoding tool is applied. The prediction mode evaluators 1722 and 2422 have the additional mode controllers 1722a and 2422a configured to control an additional mode density indicating the number of additional directional prediction modes added between basic directional prediction modes having consecutive mode numbers, according to at least one of a size of the target block, a shape of the target block, and an angular range of directional prediction. Thereby, when applying the predetermined encoding tool using a template in intra prediction, it is possible to improve prediction accuracy in intra prediction.

### (5) Other Embodiments

In the above-described embodiment, TIMD and DIMD have been described as examples of the predetermined encoding tool using a template in intra prediction. However, the predetermined encoding tool is not limited to TIMD and DIMD, and may be any encoding tool that calculates an evaluation value for each candidate prediction mode using a template by an algorithm common to the encoding side and the decoding side.

A program for causing a computer to execute each process performed by the image processing device (encoding device 1, decoding device 2) may be provided. The program may be recorded on a computer readable medium. By using the computer readable medium, it is possible to install the program on a computer. In this case, the computer readable medium on which the program is recorded may be a non-transitory recording medium. The non-transitory recording medium is not particularly limited, and may be, for example, a recording medium such as a CD-ROM or a DVD-ROM. Circuits executing each process performed by the image processing device (encoding device 1, decoding device 2) may be integrated, and the image processing device may be configured as a semiconductor integrated circuit (chipset, SoC).

Functions realized by the image processing device (encoding device 1, decoding device 2) may be implemented in circuitry or processing circuitry including a general-purpose processor, an application specific processor, an integrated circuit, ASICs (Application Specific Integrated Circuits), a CPU (Central Processing Unit), conventional circuits, and/or combinations thereof, programmed to realize the described functions. The processor includes transistors and other circuits, and is considered as circuitry or processing circuitry. The processor may be a programmed processor that executes a program stored in a memory. In this specification, circuitry, units, and means are hardware programmed to realize the described functions, or hardware that executes them. The hardware may be any hardware disclosed herein, or any hardware known to be programmed to realize the described functions or to execute them. If the hardware is a processor considered to be a type of circuitry, the circuitry, means, or unit is a combination of hardware and software used to configure the hardware and/or the processor.

Expressions "based on" and "depending on/in response to" used in the present disclosure do not mean "based only on" or "depending only on/in response to only" unless otherwise noted. The expression "based on" means both "based only on" and "based at least partially on". Similarly, the expression "depending on/in response to" means both "depending only on/in response to only" and "at least partially depending on/in response to". Terms "include", "comprise", and variants thereof do not mean that only listed items are included, and mean that only the listed items may be included or further items may be included in addition to the listed items. Also, the term "or" used in the present disclosure is intended not to be exclusive disjunction. Furthermore, any reference to elements using designations such as "first", "second", etc. used in the present disclosure does not generally limit the quantity or order of those elements. These designations can be used herein as a convenient method for distinguishing between two or more elements. Therefore, references to first and second elements do not mean that only two elements can be employed there or that the first element must precede the second element in some way. In the present disclosure, for example, when articles such as "a", "an", and "the" in English are added by translation, these articles include plurality unless it is clearly indicated that it is not so from the context.

Although the embodiments have been described in detail above with reference to the drawings, specific configurations are not limited to the above, and various design changes and the like are possible without departing from the gist.

The present application claims priority to Japanese Patent Application No. 2023-107237 (filed on June 29, 2023), the entire contents of which are incorporated herein.

### (6) Supplements

Aspects regarding the above-described embodiments will be supplemented.

### (Supplement 1)

An intra prediction device (172, 242) configured to perform intra prediction in block units obtained by dividing an image, comprising:
evaluation means (1722, 2422) configured to apply a predetermined encoding tool to a target block of the intra prediction, and calculate an evaluation value for each candidate prediction mode by an algorithm common to an encoding side and a decoding side using an adjacent decoded area adjacent to the target block; and
determination means (1723, 2423) configured to determine at least one prediction mode to be used for the intra prediction from among the candidate prediction modes according to the evaluation value calculated by the evaluation means, wherein
the candidate prediction modes include an additional directional prediction mode added to a basic directional prediction mode when the predetermined encoding tool is applied, and the evaluation means includes control means (1722a, 2422a) configured to control an additional mode density indicating the number of the additional directional prediction modes to be added between the basic directional prediction modes having consecutive mode numbers, according to at least one of a size of the target block, a shape of the target block, and an angular range of directional prediction.

### (Supplement 2)

The intra prediction device according to supplement 1, wherein
the control means sets the additional mode density to a first density in response to the size of the target block being a first size, and sets the additional mode density to a second density higher than the first density in response to the size of the target block being a second size larger than the first size.

### (Supplement 3)

The intra prediction device according to supplement 1 or 2, wherein
the control means sets the additional mode density to be uniform in response to the target block being a square, and sets the additional mode density to be non-uniform in response to the target block being a non-square.

### (Supplement 4)

The intra prediction device according to any one of supplements 1 to 3, wherein
the control means sets a higher additional mode density for all or a part of upward prediction modes, which are the basic directional prediction modes referring only to reference pixels in an upward direction, as compared with other basic directional prediction modes, in response to the target block having a horizontally long shape in which a width is larger than a height.

### (Supplement 5)

The intra prediction device according to any one of supplements 1 to 4, wherein
the control means sets a higher additional mode density for all or a part of leftward prediction modes, which are the basic directional prediction modes referring only to reference pixels in a leftward direction, as compared with other basic directional prediction modes, in response to the target block having a vertically long shape in which a height is larger than a width.

### (Supplement 6)

The intra prediction device according to any one of supplements 1 to 5, wherein
the control means sets the additional mode density corresponding to a horizontal prediction mode and a vertical prediction mode among the basic directional prediction modes lower than the additional mode density corresponding to other basic directional prediction modes.

### (Supplement 7)

An encoding device (1) comprising the intra prediction device according to any one of supplements 1 to 6.

### (Supplement 8)

A decoding device (2) comprising the intra prediction device according to any one of supplements 1 to 6.

### (Supplement 9)

A program for causing a computer to function as the intra prediction device according to any one of supplements 1 to 6.

### DESCRIPTION OF REFERENCE NUMERALS

1: Encoding device
2: Decoding device
100: Block divider
110: Subtractor
120: Transformer/Quantizer
121: Transformer
122: Quantizer
130: Entropy encoder
140: Inverse quantizer/inverse transformer
141: Inverse quantizer
142: Inverse transformer
150: Combiner
160: Memory
170: Predictor
171: Inter predictor
172: Intra predictor
173: Switcher
200: Entropy decoder
210: Inverse quantizer/inverse transformer
211: Inverse quantizer
212: Inverse transformer
220: Combiner
230: Memory
240: Predictor
241: Inter predictor
242: Intra predictor
243: Switcher
1721: Area specifier
1722: Prediction mode evaluator
1722a: Additional mode controller
1722b: Evaluation value calculator
1723: Prediction mode determiner
1724: Prediction block generator
2421: Area specifier
2422: Prediction mode evaluator
2422a: Additional mode controller
2422b: Evaluation value calculator
2423: Prediction mode determiner
2424: Prediction block generator

## Claims

1. A prediction device configured to perform prediction in block units obtained by dividing an image, the prediction device comprising:
evaluation means configured to apply a predetermined encoding tool to a target block of the prediction, and calculate an evaluation value for each candidate prediction mode by an algorithm common to an encoding side and a decoding side using an adjacent decoded area adjacent to the target block; and
determination means configured to determine at least one prediction mode to be used for the prediction from among the candidate prediction modes according to the evaluation value calculated by the evaluation means, wherein
the candidate prediction modes include an additional prediction mode added to basic prediction modes when the predetermined encoding tool is applied, and
the evaluation means includes control means configured to control the number of the additional prediction modes to be added between the basic prediction modes according to at least one of a size of the target block and a shape of the target block.

2. The prediction device according to claim 1, wherein
the prediction is intra prediction,
the basic prediction modes are basic directional prediction modes,
the additional prediction mode is an additional directional prediction mode, and
the control means controls an additional mode density indicating the number of the additional directional prediction modes to be added between the basic directional prediction modes having consecutive mode numbers, according to at least one of the size of the target block and the shape of the target block.

3. The prediction device according to claim 2, wherein
the control means
sets the additional mode density to a first density in response to the size of the target block being a first size, and
sets the additional mode density to a second density higher than the first density in response to the size of the target block being a second size larger than the first size.

4. The prediction device according to claim 2, wherein
the control means sets the additional mode density to be uniform in response to the target block being a square, and sets the additional mode density to be non-uniform in response to the target block being a non-square.

5. The prediction device according to claim 2, wherein
the control means sets a higher additional mode density for all or a part of upward prediction modes, which are the basic directional prediction modes referring only to reference pixels in an upward direction, as compared with other basic directional prediction modes, in response to the target block having a horizontally long shape in which a width is larger than a height.

6. The prediction device according to claim 2, wherein
the control means sets a higher additional mode density for all or a part of leftward prediction modes, which are the basic directional prediction modes referring only to reference pixels in a leftward direction, as compared with other basic directional prediction modes, in response to the target block having a vertically long shape in which a height is larger than a width.

7. The prediction device according to claim 2, wherein
the control means controls the additional mode density according to at least one of the size of the target block and the shape of the target block, and an angular range of the directional prediction.

8. The prediction device according to claim 7, wherein
the control means sets the additional mode density corresponding to a horizontal prediction mode and a vertical prediction mode among the basic directional prediction modes lower than the additional mode density corresponding to other basic directional prediction modes.

9. An encoding device comprising the prediction device according to any one of claims 1 to 8.

10. A decoding device comprising the prediction device according to any one of claims 1 to 8.

11. A program for causing a computer to function as the prediction device according to any one of claims 1 to 8.
